# EUROPEAN PATENT APPLICATION

(11) **EP 4 625 843 A1**
(43) Date of publication of application: **01.10.2025**
(21) Application number: 23894380.7
(22) Date of filing: 01.11.2023
(51) Int. Cl.: H04B 10/112, H04B 10/80, H04J 14/02, H04L 27/26

(54) **CELLULAR OPTICAL COMMUNICATION SYSTEM, BASE STATION DEVICE, AND TERMINAL DEVICE**

(30) Priority: 24.11.2022 JP 2022187540
(71) Applicant: Kyocera Corporation, Kyoto-shi, Kyoto 612-8501 (JP)
(72) Inventor: YAMAZAKI, Chiharu, Kyoto-shi, Kyoto 612-8501 (JP)
(74) Representative: Viering, Jentschura & Partner mbB Patent- und Rechtsanwälte
(86) International application number: PCT/JP2023/039395
(87) International publication number: WO 2024/111368

(57) **Abstract**

A cellular optical communication system that performs optical communication being wireless communication using light, includes a base station apparatus that manages a cell, and a terminal apparatus that performs the optical communication with the base station apparatus in the cell by using an OFDM scheme. The base station apparatus and the terminal apparatus perform the optical communication using an ACO-OFDM scheme at least when the terminal apparatus is located in a cell edge region.

## Description

### TECHNICAL FIELD

The present disclosure relates to a cellular optical communication system, a base station apparatus, and a terminal apparatus.

### BACKGROUND OF INVENTION

Optical communication systems are known that, for example, in underwater communications, perform wireless communications (also simply referred to as "optical communications") using light, particularly visible light, as a transmission medium. Since light has high directivity, optical communication systems in the related art generally perform, on the assumption that optical communication apparatuses on a transmitting side and a receiving side are fixed, one-to-one optical communication with the transmitting side and the receiving side facing each other.

In such optical communications, a wide range of studies are performed for intensity modulation direct detection (IM/DD). In the IM/DD scheme, data transmission is performed by utilizing the intensity of light emitted by a light emitting element such as a light emitting diode (LED). The transmitting side transmits an optical signal whose intensity is modulated in accordance with the transmission data. The receiving side acquires the transmission data by directly detecting the intensity of the received optical signal using a light receiving element such as a photodiode (PD).

One modulation scheme used in the IM/DD scheme is a subcarrier modulation scheme. Subcarrier modulation is a scheme of transmitting data by controlling the intensity of light emitted from a light emitting element to be a sinusoidal wave and modulating the amplitude and/or phase of this sinusoidal wave (also called a "subcarrier"). In particular, an orthogonal frequency division multiplexing (OFDM) scheme that uses a plurality of subcarriers can achieve high transmission efficiency.

In radio wave communication, which uses radio waves as a transmission medium, OFDM signals of both positive and negative polarity are used, but in optical communication, there exist no negative values for light intensity, so that the OFDM scheme for radio wave communication cannot be directly applied to optical communication using the IM/DD scheme. A direct current biased optical (DCO)-OFDM scheme and an asymmetrically clipped optical (ACO)-OFDM scheme have been proposed as optical wireless OFDM techniques that realize the OFDM scheme using the IM/DD scheme.

In the DCO-OFDM scheme, a DC bias (that is, an offset) is applied to the signal waveform to keep the signal within a range of 0 or more. On the other hand, in the ACO-OFDM scheme, while only subcarriers having frequencies that are odd multiples of the fundamental frequency (also referred to as "odd-numbered subcarriers") are used, negative values are clipped to zero on the transmitting side. Since odd-numbered subcarriers are odd functions, the negative values can be complemented by inverting the waveforms above 0 on the receiving side.

The ACO-OFDM scheme does not apply a DC bias as in the DCO-OFDM scheme, and therefore has superior power efficiency and higher noise resistance compared to the DCO-OFDM scheme. However, since the ACO-OFDM scheme cannot use subcarriers having frequencies that are even multiples of the fundamental frequency (also referred to as "even-numbered subcarriers"), the ACO-OFDM scheme has a lower throughput than the DCO-OFDM scheme.

### CITATION LIST

### NON-PATENT LITERATURE

Non-Patent Document 1: Kouji OHUCHI, "Fundamental Techniques for Optical Wireless OFDM System," IEICE Fundamentals Review Vol. 13 No. 1

### SUMMARY

A cellular optical communication system according to a first aspect is a cellular optical communication system that performs optical communication, which is wireless communication using light, the cellular optical communication system including: a base station apparatus configured to manage a cell; and a terminal apparatus configured to perform the optical communication with the base station apparatus in the cell by using an orthogonal frequency division multiplexing (OFDM) scheme. The base station apparatus and the terminal apparatus are configured to perform the optical communication using an asymmetrically clipped optical (ACO)-OFDM scheme at least when the terminal apparatus is located in a cell edge region.

A base station apparatus according to a second aspect is a base station apparatus that manages a cell in a cellular optical communication system for performing optical communication being wireless communication using light, the base station apparatus including: an optical communicator configured to perform the optical communication with the terminal apparatus in the cell using an orthogonal frequency division multiplexing (OFDM) scheme; and a controller configured to control the optical communicator such that the optical communication with the terminal apparatus is performed using an asymmetrically clipped optical (ACO)-OFDM scheme at least when the terminal apparatus is located in a cell edge region.

A terminal apparatus according to a third aspect is a terminal apparatus used in a cellular optical communication system that performs optical communication being wireless communication using light, the terminal apparatus including: an optical communicator configured to perform the optical communication with a base station apparatus that manages a cell by using an orthogonal frequency division multiplexing (OFDM) scheme; and a controller configured to control the optical communicator such that the optical communication with the base station apparatus is performed using an asymmetrically clipped optical (ACO)-OFDM scheme at least when the terminal apparatus is located in a cell edge region.

### BRIEF DESCRIPTION OF THE DRAWINGS

FIG. 1 is a diagram illustrating a configuration example of a cellular optical communication system according to an embodiment.
FIG. 2 is a diagram illustrating an example communication frame structure used in the cellular optical communication system according to the embodiment.
FIG. 3 is a diagram illustrating a configuration example of a base station apparatus according to the embodiment.
FIG. 4 is a diagram illustrating an outer appearance configuration example of the base station apparatus according to the embodiment.
FIG. 5 is a diagram illustrating a configuration example of a terminal apparatus according to the embodiment.
FIG. 6 is a diagram illustrating an outer appearance configuration example of the terminal apparatus according to the embodiment.
FIG. 7 is a diagram for describing spatial multiplexing transmission according to the embodiment.
FIG. 8 is a diagram for describing composite transmission according to the embodiment.
FIG. 9 is a diagram for describing a DCO-OFDM scheme, which is one type of optical wireless OFDM scheme.
FIG. 10 is a diagram illustrating a configuration example of a transmitter of the base station apparatus and a receiver of the terminal apparatus when the DCO-OFDM scheme is used in downlink transmission.
FIG. 11 is a diagram for describing an ACO-OFDM scheme, which is one type of optical wireless OFDM scheme.
FIG. 12 is a diagram for describing an ACO-OFDM scheme, which is one type of optical wireless OFDM scheme.
FIG. 13 is a diagram illustrating a configuration example of a transmitter of the base station apparatus and a receiver of the terminal apparatus when the ACO-OFDM scheme is used in downlink transmission.
FIG. 14 is a diagram for describing selection of an optical wireless OFDM scheme according to the embodiment.
FIG. 15 is a diagram for describing a Layered-ACO-OFDM scheme.
FIG. 16 is a diagram for describing problems that arise when the Layered-ACO-OFDM scheme is applied to the cellular optical communication system.
FIG. 17 is a diagram for describing problems that arise when the Layered-ACO-OFDM scheme is applied to the cellular optical communication system.
FIG. 18 is a diagram for describing spatial multiplexing transmission using the Layered-ACO-OFDM scheme according to the embodiment.
FIG. 19 is a diagram for describing spatial multiplexing transmission using the Layered-ACO-OFDM scheme according to the embodiment.
FIG. 20 is a diagram for describing composite transmission using the Layered-ACO-OFDM scheme according to the embodiment.
FIG. 21 is a diagram for describing resource allocation according to the embodiment.
FIG. 22 is a diagram for describing another embodiment.
FIG. 23 is a diagram for describing another embodiment.
FIG. 24 is a diagram for describing another embodiment.

### DESCRIPTION OF EMBODIMENTS

In the future, it is expected that cellular operation will be realized in optical communication systems, in which a coverage area will be divided into small regions called cells and a base station apparatus that manages a cell will perform optical communication with a terminal apparatus within the cell. Such an optical communication system is also called a cellular optical communication system. However, a technique for performing optical communication using an OFDM scheme in a cellular optical communication system has not yet been established.

An object of the present disclosure is to enable appropriate performance of optical communication using an OFDM scheme.

A cellular optical communication system according to an embodiment will be described with reference to the drawings. In the description of the drawings, the same or similar parts are denoted by the same or similar reference signs.

The cellular optical communication system according to the embodiment is a system that performs optical communication using visible light as an example of light. However, the cellular optical communication system may be a system that performs optical communication by further using light other than visible light, for example, infrared light. The cellular optical communication system according to the embodiment is a system that performs optical communication underwater. However, the cellular optical communication system is not limited to a system that performs optical communication underwater, and may be, for example, a system that performs optical communication in space.

### (1) Configuration Example of Cellular Optical Communication System

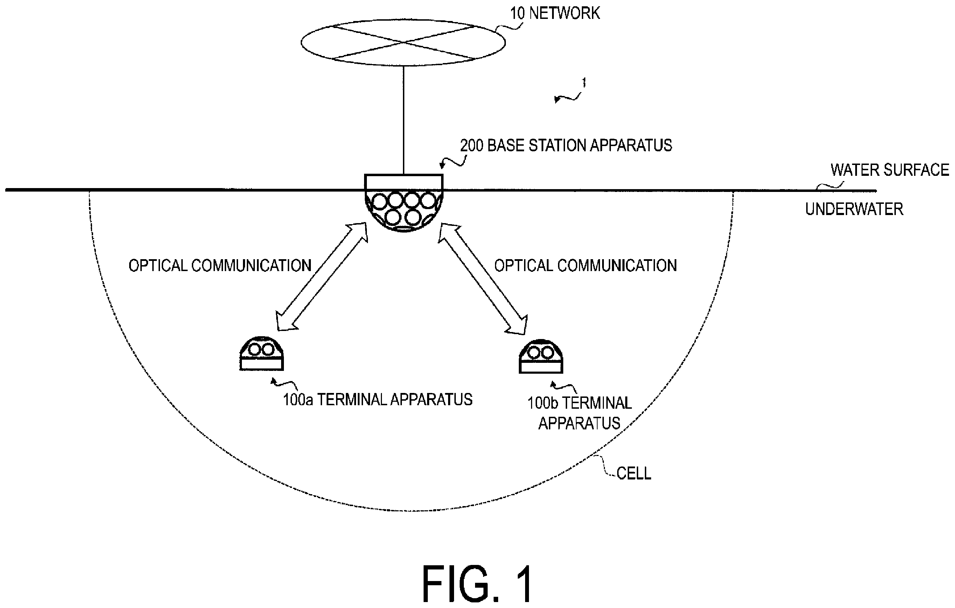

First, a configuration example of a cellular optical communication system according to an embodiment will be described. FIG. 1 is a diagram illustrating a configuration example of a cellular optical communication system 1 according to an embodiment.

In the cellular optical communication system 1, a coverage area is divided into small regions called cells, and a base station apparatus 200 that manages a cell performs optical communication with a terminal apparatus 100 within the cell. In the illustrated example, the cellular optical communication system 1 includes a plurality of terminal apparatuses 100 (100a and 100b) and a base station apparatus 200. However, the number of terminal apparatuses 100 and the number of base station apparatuses 200 are not limited to those in the illustrated example.

Each terminal apparatus 100 is an example of an optical communication apparatus. Each terminal apparatus 100 is underwater. Each terminal apparatus 100 is configured to be movable underwater. For example, each terminal apparatus 100 may be a self-propelled apparatus such as an underwater robot or an underwater drone. The terminal apparatus 100 connects to a base station apparatus 200 that manages the cell in which the terminal apparatus 100 exists (also referred to as a "serving cell"), and performs optical communication with the connected base station apparatus 200 (also referred to as a "serving base station").

Each terminal apparatus 100 includes a plurality of light receivers/emitters whose optical axes (from another point of view, the directivity of optical communication) are oriented in different directions. The light receiver/emitter includes at least one light emitting element and at least one light receiving element. Accordingly, each terminal apparatus 100 can use light as a transmission medium and use a plurality of light receivers/emitters to perform optical communication in various methods.

Each terminal apparatus 100 may include a sensor such as an image sensor and generate sensor data. For example, each terminal apparatus 100 may transmit uplink (UL) data including sensor data to the base station apparatus 200 via optical communication. Each terminal apparatus 100 may receive downlink (DL) data including instruction data from the base station apparatus 200 via optical communication. The terminal apparatus 100 may move and perform a sensing operation (imaging or the like) based on the instruction data.

The base station apparatus 200 is another example of the optical communication apparatus. In order to construct a wide coverage area underwater, a plurality of base station apparatuses 200 may be deployed at intervals in the horizontal direction. The base station apparatus 200 may be installed temporarily, for example, during the period when underwater surveys are carried out using each terminal apparatus 100. In FIG. 1, a cell, which is a communication area of each base station apparatus 200, is indicated by a dashed line.

The base station apparatus 200 has, for example, a buoyant member and is located near the water surface. The base station apparatus 200 is communicatively connected to a network 10 via a backhaul line. The backhaul line may be a wireless line. The backhaul line may be a wired line. The network 10 may include the Internet. The base station apparatus 200 may perform inter-base station communication with another base station apparatus via the network 10.

The base station apparatus 200 includes a plurality of light receivers/emitters whose optical axes are oriented in different directions. The light receiver/emitter includes at least one light emitting element and at least one light receiving element. In the illustrated example, the base station apparatus 200 has a hemispherical housing submerged in water, and a plurality of light receivers/emitters are arranged in an array on the surface of the spherical housing. Accordingly, the base station apparatus 200 can use light as a transmission medium and use a plurality of light receivers/emitters to perform optical communication in various methods.

The base station apparatus 200 selects its own light receiver/emitter corresponding to a direction of each terminal apparatus 100 connected to the base station apparatus 200 and uses the selected light receiver/emitter to perform optical communication with the terminal apparatus 100. Similarly, the terminal apparatus 100 selects its own light receiver/emitter that corresponds to the direction of the base station apparatus 200 that is its serving base station, and performs optical communication with the base station apparatus 200 using the selected light receiver/emitter.

The base station apparatus 200 may transmit a synchronous optical signal and/or a reference optical signal unique to the base station apparatus 200 in all directions from all light receivers/emitters. The terminal apparatus 100 may specify the direction of the base station apparatus 200 based on these optical signals, and may also specify its own light receiver/emitter that corresponds to that direction, and may perform optical communication with the base station apparatus 200 using the specified light receiver/emitter.

In this manner, in the cellular optical communication system 1, the base station apparatus 200 transmits optical signals from a plurality of light emitting elements having different directivities to form a communication area (cell). The base station apparatus 200 needs to appropriately accommodate a plurality of terminal apparatuses 100 in a cell including a cell edge region. In the cell edge region, the received power of the optical signal from the base station apparatus 200 is low, and interference from adjacent cells may also occur. Therefore, the optical communication environment in the cell edge region is poor, and the signal-to-noise ratio (SNR) of the optical signal received by the terminal apparatus 100 in the cell edge region from the base station apparatus 200 is generally low.

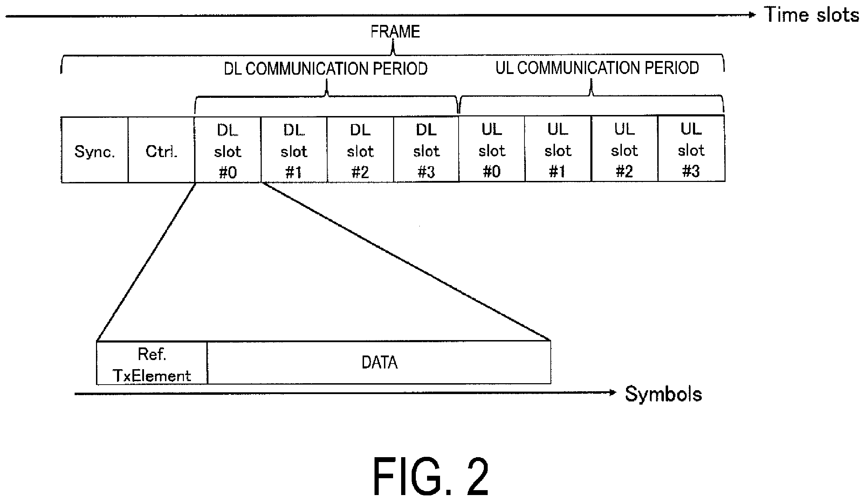

FIG. 2 is a diagram illustrating an example communication frame structure used in the cellular optical communication system 1 according to the embodiment. Although one communication frame includes 10 time slots in the illustrated example, the number of time slots included in one communication frame is not limited to 10. Note that each of the time slots includes the predetermined number of symbol sections.

In this frame structure example, the communication frame consists of one synchronization slot (Sync.), one control slot (Ctrl.), four DL slots #0 to #3, and four UL slots #0 to #3. In this regard, in a scenario that a data amount of UL communication is larger than that of DL communication, UL slots in a communication frame may be provided more than DL slots.

The synchronization slot (Sync.) is a time slot in which the base station apparatus 200 transmits a synchronization optical signal (and a reference optical signal unique to the base station apparatus). The terminal apparatus 100 identifies the base station apparatus 200 based on the synchronization optical signal received from the base station apparatus 200, and establishes or maintains synchronization with the base station apparatus 200 by using the synchronization optical signal. Note that the reference optical signal unique to the base station apparatus may be transmitted in all slots other than the UL slot. The reference optical signal is used in the terminal apparatus 100 to measure the intensity of light received from the base station apparatus 200.

The control slot (Ctrl.) is a time slot in which the base station apparatus 200 transmits a control optical signal. The control optical signal includes, for example, scheduling information indicating DL and UL resource allocations (e.g., time slot allocations). The terminal apparatus 100 recognizes own time slot allocation by, for example, a control optical signal received from the base station apparatus 200.

The DL slots #0 to #3 constitute a DL communication period. The base station apparatus 200 allocates each of the DL slots #0 to #3 to one or more terminal apparatuses 100. The base station apparatus 200 transmits a DL data optical signal in each DL slot. A light emitting element-specific reference signal (Ref.TxElement) and a data optical signal may be mapped in each DL slot in a time division manner.

The UL slots #0 to #3 constitute a UL communication period. The base station apparatus 200 allocates each of the UL slots #0 to #3 to one or more terminal apparatuses 100. The terminal apparatus 100 transmits a UL data optical signal in the allocated UL slot.

The base station apparatus 200 can perform simultaneous communication with the plurality of terminal apparatuses 100 located in mutually different directions. Specifically, the base station apparatus 200 can spatially multiplex the plurality of terminal apparatuses 100 located in mutually different directions. Therefore, the base station apparatus 200 may allocate one DL slot or one UL slot to a plurality of terminal apparatuses 100.

In the cellular optical communication system 1, the IM/DD scheme is used for optical communication between the terminal apparatus 100 and the base station apparatus 200. In the IM/DD scheme, data transmission is performed by utilizing the intensity of light emitted by a light emitting element on the transmitting side of the optical signal. The transmitting side transmits an optical signal whose intensity is modulated in accordance with the transmission data. The receiving side acquires the transmission data by directly detecting the intensity of the received optical signal using a light receiving element.

The cellular optical communication system 1 uses an OFDM scheme, which is one type of subcarrier modulation scheme, at least in the DL. In the following description of the embodiment, DL will be mainly described, but control being the same as or similar to that of DL may be applied to UL.

The terminal apparatus 100 performs optical communication with the base station apparatus 200 in the cell of the base station apparatus 200 using the OFDM scheme. The base station apparatus 200 and the terminal apparatus 100 perform optical communication using an ACO-OFDM scheme at least when the terminal apparatus 100 is located in a cell edge region. That is, the base station apparatus 200 adaptively uses ACO-OFDM at least for communication with the terminal apparatus 100 in a poor communication environment. This makes it possible to improve noise resistance, thereby enabling optical communications according to the OFDM scheme to be carried out appropriately.

### (2) Configuration Example of Base Station Apparatus

A configuration example of the base station apparatus 200 according to the embodiment will be described.

### (2.1) Block Configuration Example of Base Station Apparatus

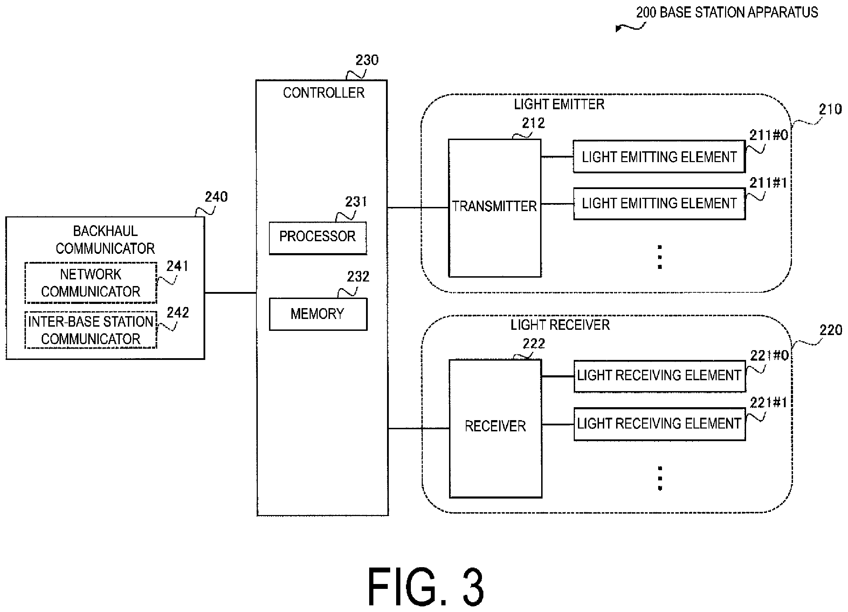

FIG. 3 is a diagram illustrating a configuration example of the base station apparatus 200 according to the embodiment. The base station apparatus 200 includes a light emitter 210, a light receiver 220, a controller 230, and a backhaul communicator 240. The light emitter 210 and the light receiver 220 constitute an optical communicator. The base station apparatus 200 may include a battery for supplying electrical power necessary for the base station apparatus 200 to operate.

The light emitter 210 transmits an optical signal to each terminal apparatus 100 under control of the controller 230. The light emitter 210 includes a plurality of light emitting elements 211 (211#0, 211#1, ...) and a transmitter 212. Each light emitting element 211 may be a laser diode (LD) or a light emitting diode (LED). In the following, an example in which each light emitting element 211 is an LED will be mainly described. Each light emitting element 211 converts an electrical signal (transmission signal) output by the transmitter 212 for optical communication into an optical signal, and transmits the optical signal.

The transmitter 212 may be made of a Field-Programmable Gate Array (FPGA) and/or a System on a Chip (SoC). The transmitter 212 performs signal processing on a transmission signal output from the controller 230, converts the signal after the signal processing, and outputs the signal to each light emitting element 211. In the embodiment, the plurality of light emitting elements 211 have optical axes oriented in different directions. That is, the plurality of light emitting elements 211 have directivity (transmission directivity) in different directions.

The light receiver 220 receives an optical signal from the terminal apparatus 100. The light receiver 220 includes a plurality of light receiving elements 221 (221#0, 221#1, ...) and a receiver 222. Each light receiving element 221 may be a photodiode (PD). Each light receiving element 221 receives an optical signal, converts the received optical signal into an electrical signal (reception signal), and outputs the reception signal to the receiver 222. The receiver 222 may include an FPGA and/or an SoC. At least a part of the receiver 222 may be integrated with the transmitter 212. The receiver 222 converts the reception signal output by each light receiving element 221, performs signal processing on the converted reception signal, and outputs the processed reception signal to the controller 230.

For example, the light receiving element 221 is provided in a one-to-one correspondence with the light emitting element 211. Here, the light receiving element 221 has directivity (reception directivity) in the same direction as the corresponding light emitting element 211. That is, a plurality of pairs of the light emitting elements 211 and the light receiving elements 221 transmit optical signals in different directions and receive optical signals from different directions.

The controller 230 controls an overall operation of the base station apparatus 200. For example, the controller 230 controls the light emitter 210 and the light receiver 220. The operations of the base station apparatus 200 described above and below may be operations performed under the control of the controller 230. The controller 230 includes at least one processor 231 and at least one memory 232. The memory 232 stores a program to be executed by the processor 231 and information to be used for processing by the processor 231. The processor 231 executes programs stored in the memory to perform various types of processing.

The backhaul communicator 240 performs backhaul communication via a backhaul line under control of the controller 230. The backhaul communicator 240 may have a network communicator 241 that communicates with the network 10 (for example, a core network) and an inter-base station communicator 242 that performs inter-base station communication with adjacent base stations.

The base station apparatus 200 configured in this manner manages a cell in the cellular optical communication system 1. The optical communicator, which includes the light emitter 210 and the light receiver 220, performs optical communication with the terminal apparatus 100 in the cell according to the OFDM scheme (optical wireless OFDM scheme). The controller 230 controls the optical communicator such that optical communication with the terminal apparatus 100 is performed using an ACO-OFDM scheme at least when the terminal apparatus 100 is located in a cell edge region. The optical communication using an ACO-OFDM scheme may be optical communication using a Layered-ACO-OFDM scheme, which will be described later.

### (2.2) Outer Appearance Configuration Example of Base Station Apparatus

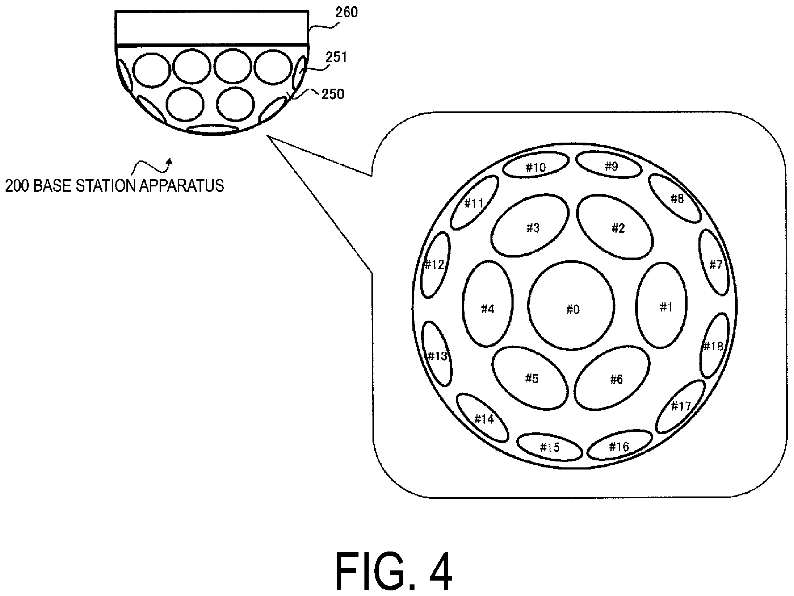

FIG. 4 is a diagram illustrating an outer appearance configuration example of the base station apparatus 200 according to the embodiment.

The base station apparatus 200 includes a hemispherical light receiver/emitter 250 and a body portion 260 coupled to the light receiver/emitter 250. However, the base station apparatus 200 may be formed into a spherical shape as a whole. The light receiver/emitter 250 includes a plurality of light receiving/emitting regions 251 arranged in a distributed manner. Each light receiving/emitting region 251 is provided with at least one pair of a light emitting element 211 and a light receiving element 221. This configuration makes it easy for the base station apparatus 200 to perform optical communication with the terminal apparatuses 100 in various directions.

In the illustrated example, the hemispherical light receiver/emitter 250 includes a total of 19 light receiving/emitting regions 251 including light receiving/emitting regions 251#0 to 251#18. That is, the base station apparatus 200 includes a total of 19 light emitting elements including the light emitting elements 211#0 to 211#18, and a total of 19 light receiving elements including the light receiving elements 221#0 to 221#18.

### (3) Configuration Example of Terminal Apparatus

A configuration example of the terminal apparatus 100 according to the embodiment will be described.

### (3.1) Block Configuration Example of Terminal Apparatus

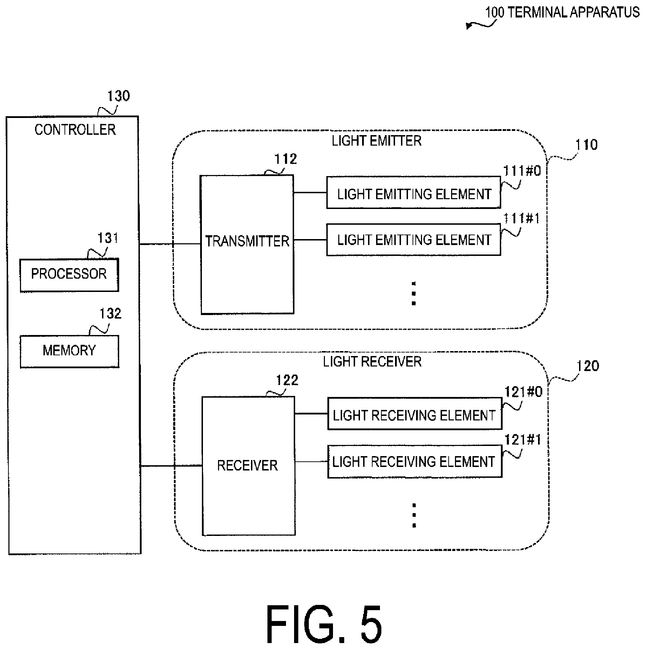

FIG. 5 is a diagram illustrating a configuration example of the terminal apparatus 100 according to the embodiment. The terminal apparatus 100 includes a light emitter 110, a light receiver 120, and a controller 130. The light emitter 110 and the light receiver 120 constitutes an optical communicator. The terminal apparatus 100 may include a battery for supplying electrical power necessary for the terminal apparatus 100 to operate. The terminal apparatus 100 may include a moving mechanism (e.g., a motor and a screw) used for the terminal apparatus 100 to move.

The light emitter 110 transmits an optical signal to the base station apparatus 200 under control of the controller 130. The light emitter 110 includes a plurality of light emitting elements 111 (111#0, 111#1, ...) and a transmitter 112. Each light emitting element 111 may be a laser diode (LD) or a light emitting diode (LED). In the following, an example in which each light emitting element 211 is an LED will be mainly described. Each light emitting element 111 converts an electrical signal (transmission signal) output by the transmitter 112 for optical communication into an optical signal, and transmits the optical signal.

The transmitter 112 may include an FPGA and/or an SoC. The transmitter 112 performs signal processing on a transmission signal output by the controller 130, converts the signal after the signal processing, and outputs the converted signal to each light emitting element 111. In the embodiment, the plurality of light emitting elements 111 have optical axes oriented in different directions. That is, the plurality of light emitting elements 111 have directivity (transmission directivity) in different directions.

The light receiver 120 receives an optical signal from the base station apparatus 200. The light receiver 120 includes a plurality of light receiving elements 121 (121#0, 121#1, ...) and a receiver 122. Each light receiving element 121 may be a photodiode (PD). Each light receiving element 121 receives an optical signal, converts the received optical signal into an electrical signal (reception signal), and outputs the reception signal to the receiver 122.

The receiver 122 may include an FPGA and/or an SoC. At least a part of the receiver 122 may be integrated with the transmitter 112. The receiver 122 converts the reception signal output by each light receiving element 121, performs signal processing on the converted reception signal, and outputs the processed reception signal to the controller 130.

For example, the light receiving element 121 is provided in a one-to-one correspondence with the light emitting element 111. Here, the light receiving element 121 has directivity (reception directivity) in the same direction as the corresponding light emitting element 111. That is, a plurality of pairs of the light emitting elements 111 and the light receiving elements 121 transmit optical signals in different directions and receive optical signals from different directions.

The controller 130 controls an overall operation of the terminal apparatus 100. For example, the controller 130 controls the light emitter 110 and the light receiver 120. The operations of the terminal apparatus 100 described above and below may be operations performed under the control of the controller 130. The controller 130 includes at least one processor 131 and at least one memory 132. The memory 132 stores a program to be executed by the processor 131 and information to be used for processing by the processor 131. The processor 131 executes programs stored in the memory to perform various types of processing.

In the terminal apparatus 100 configured in this manner, the optical communicator, which includes the light emitter 110 and the light receiver 120, performs optical communication with the base station apparatus 200 according to the OFDM scheme (optical wireless OFDM scheme). The controller 130 controls the optical communicator such that optical communication with the base station apparatus 200 is performed using an ACO-OFDM scheme at least when the terminal apparatus 100 itself is located in a cell edge region. The optical communication using an ACO-OFDM scheme may be optical communication using a Layered-ACO-OFDM scheme, which will be described later.

### (3.2) Outer Appearance Configuration Example of Terminal Apparatus

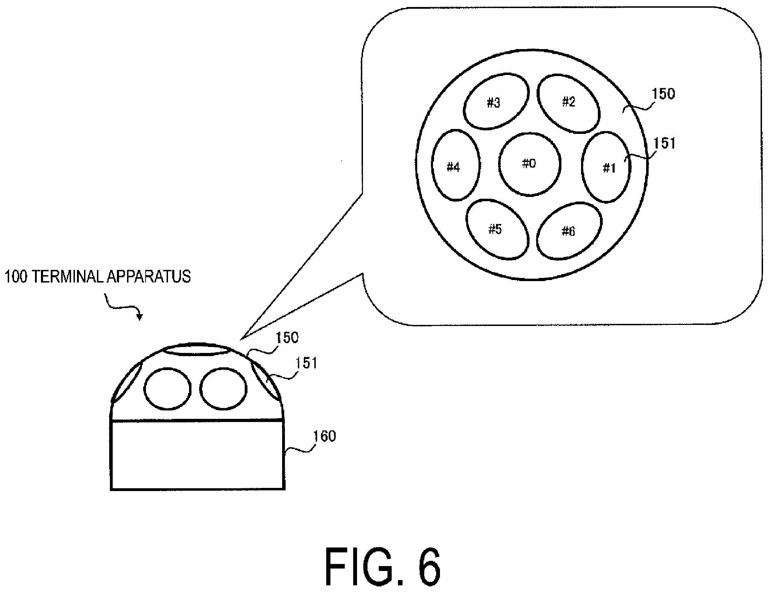

FIG. 6 is a diagram illustrating an outer appearance configuration example of the terminal apparatus 100 according to the embodiment.

The terminal apparatus 100 includes a hemispherical light receiver/emitter 150 and a body portion 160 coupled to the light receiver/emitter 150. However, the terminal apparatus 100 may be formed into a spherical shape as a whole. The light receiver/emitter 150 includes a plurality of light receiving/emitting regions 151 arranged in a distributed manner. Each light receiving/emitting region 151 is provided with at least one pair of a light emitting element 111 and a light receiving element 121. This configuration makes it easy for the terminal apparatus 100 to perform optical communication with the base station apparatus 200 in various directions.

In the illustrated example, the hemispherical light receiver/emitter 150 includes a total of seven light receiving/emitting regions 151 including light receiving/emitting regions 151#0 to 151#6. That is, the terminal apparatus 100 includes a total of seven light emitting elements including the light emitting elements 111#0 to 111#6, and a total of seven light receiving elements including the light receiving elements 121#0 to 121#6.

### (4) Downlink Transmission

Downlink transmission according to the embodiment will be described.

The above-mentioned base station apparatus 200 includes a plurality of light emitting elements 211 having different directivities. In downlink transmission, the base station apparatus 200 uses a plurality of light emitting elements 211 to perform spatial multiplexing transmission for transmitting data to different terminal apparatuses 100, or composite transmission for transmitting the same data to the same terminal apparatus 100. In the cellular optical communication system 1, it is necessary to perform such downlink transmission appropriately for low SNR terminals in the cell edge region.

### (4.1) Spatial Multiplexing Transmission

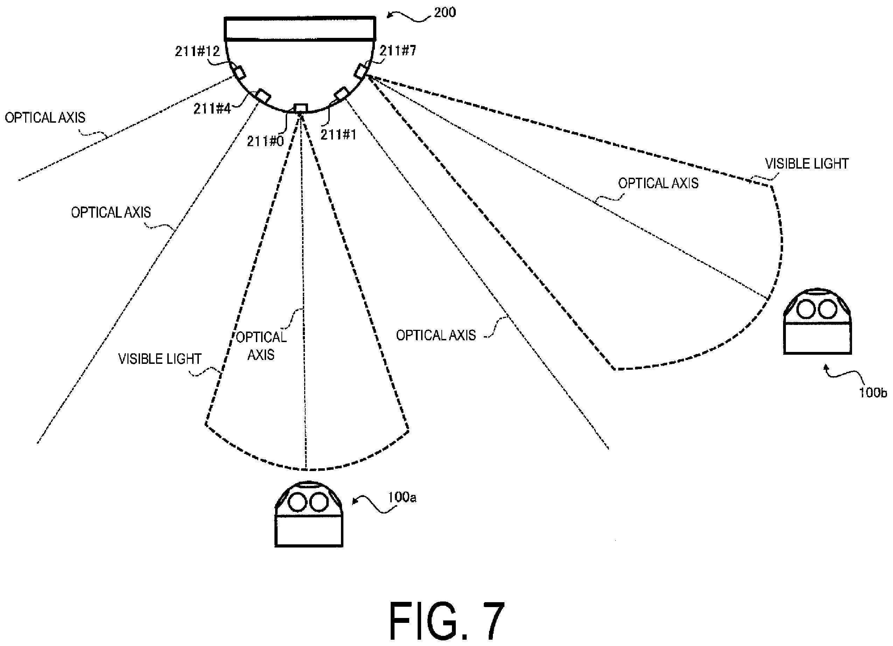

FIG. 7 is a diagram for describing spatial multiplexing transmission according to the embodiment. FIG. 7 illustrates a simplified cross section of the base station apparatus 200.

In the base station apparatus 200, the plurality of light emitting elements 211 are arranged such that the angle formed between the optical axis of one light emitting element 211 and the optical axis of another light emitting element 211 increases as the distance between the one light emitting element 211 and the other light emitting element 211 increases. The angle formed between the optical axis of the light emitting element 211#0 and the optical axis of the light emitting element 211#7 not adjacent to the light emitting element 211#0 is larger than the angle formed between the optical axis of the light emitting element 211#0 and the optical axis of the light emitting element 211#1 adjacent to the light emitting element 211#0.

In the illustrated example, while the base station apparatus 200 transmits an optical signal to the terminal apparatus 100a using the light emitting element 211#0, the base station apparatus 200 transmits an optical signal to the terminal apparatus 100b using the light emitting element 211#7 whose optical axis is oriented in a different direction from that of the light emitting element 211#0. This causes transmission to the terminal apparatus 100a and transmission to the terminal apparatus 100b to be performed in a spatial division manner, and simultaneous transmission can be performed while suppressing the effects of interference between them. This makes it possible to increase the number of terminal apparatuses 100 accommodated by the base station apparatus 200, thereby improving the system capacity of the cellular optical communication system 1.

### (4. 2) Composite Transmission

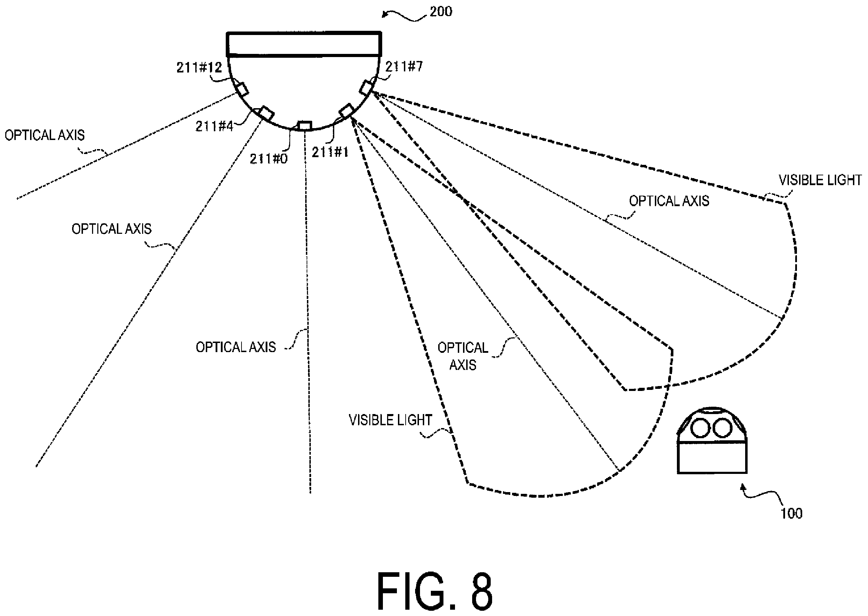

FIG. 8 is a diagram for describing composite transmission according to the embodiment. FIG. 8 illustrates a simplified cross section of the base station apparatus 200.

In the illustrated example, the base station apparatus 200 transmits an optical signal to the terminal apparatus 100 using the light emitting element 211#1 and transmits the same optical signal to the same terminal apparatus 100 using the light emitting element 211#7 whose optical axis is oriented in a different direction from that of the light emitting element 211#1. The optical signal transmitted by the light emitting element 211#1 and the optical signal transmitted by the light emitting element 211#7 are the same optical signal, and therefore are partially combined and constructively coupled together underwater. As a result, the communicable distance can be increased.

### (5) Optical Wireless OFDM Scheme

A DCO-OFDM scheme and an ACO-OFDM scheme will be described as optical wireless OFDM schemes according to the embodiment. Although the details of these schemes are described in Non-Patent Document 1, an overview of each scheme will be given here.

### (5.1) DCO-OFDM Scheme

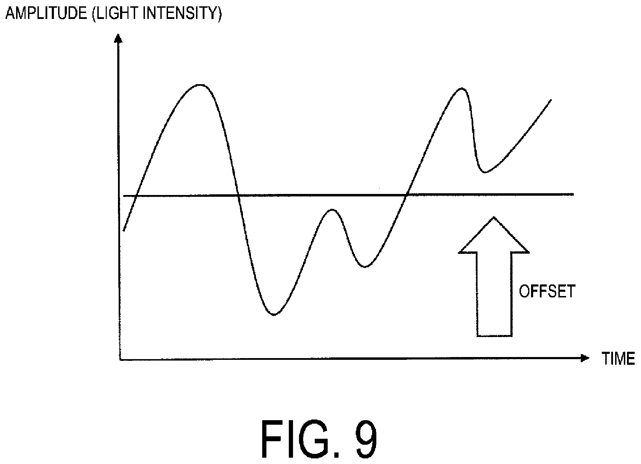

FIG. 9 is a diagram for describing the DCO-OFDM scheme, which is one type of optical wireless OFDM scheme.

In the DCO-OFDM scheme, a DC bias (that is, an offset) is applied to the signal waveform to keep the signal within a range of 0 or more. Specifically, the transmitting side adds a DC bias to a baseband OFDM signal to generate a non-negative polarity signal, and transmits the non-negative polarity signal.

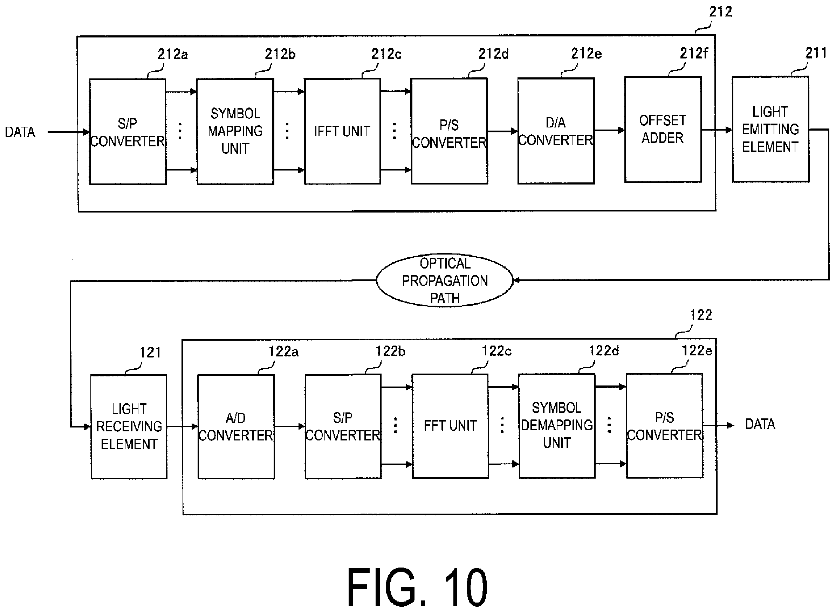

FIG. 10 is a diagram illustrating a configuration example of the transmitter 212 of the base station apparatus 200 and the receiver 122 of the terminal apparatus 100 when the DCO-OFDM scheme is used in downlink transmission.

The transmitter 212 of the base station apparatus 200 includes a serial/parallel (S/P) converter 212a, a symbol mapping unit 212b, an inverse fast Fourier transform (IFFT) unit 212c, a parallel/serial (P/S) converter 212d, a digital/analog (D/A) converter 212e, and an offset adder 212f.

The S/P converter 212a converts the transmission data output by the controller 230 of the base station apparatus 200 from serial data to parallel data, and outputs the parallel data to the symbol mapping unit 212b. The symbol mapping unit 212b maps (primarily modulates) the parallel data to symbol data of each subcarrier, and outputs frequency-domain symbol data to the IFFT unit 212c. The IFFT unit 212c converts the symbol data into a time-axis waveform by IFFT, and outputs a baseband OFDM signal. The frequency of each subcarrier multiplexed in the OFDM scheme is an integer multiple of the fundamental frequency f₀. The P/S converter 212d converts the baseband OFDM signal output by the IFFT unit 212c into serial data and outputs the serial data. The D/A converter 212e converts the data output by the P/S converter 212d from a digital signal to an analog signal, and outputs the analog signal. The offset adder 212f generates a non-negative polarity signal by adding a DC bias to the analog signal output by the D/A converter 212e, and outputs the non-negative polarity signal (electrical signal). Then, the light emitting element 211 converts the electrical signal output by the D/A converter 212e into an optical signal, and transmits the optical signal.

This optical signal is received by the light receiving element 121 of the terminal apparatus 100 via an optical propagation path. The light receiving element 121 converts the received optical signal into an electrical signal and outputs the electrical signal to the receiver 122. The receiver 122 of the terminal apparatus 100 includes an analog/digital (A/D) converter 122a, an S/P converter 122b, a fast Fourier transform (FFT) unit 122c, a symbol demapping unit 122d, and a P/S converter 122e.

The A/D converter 122a converts the electrical signal output by the light receiving element 121 from an analog signal to a digital signal and outputs the digital signal. The S/P converter 122b converts the digital signal output by the A/D converter 122a into parallel data (time-axis waveform) and outputs the parallel data. The FFT unit 122c converts the time-axis waveform output by the S/P converter 122b into frequency-domain symbol data by FFT and outputs the symbol data. The symbol demapping unit 122d demaps the symbol data output by the FFT unit 122c and outputs the result. The P/S converter 122e converts the demapped data into serial data (that is, the original transmission data) and outputs the serial data to the controller 130.

### (5.2) ACO-OFDM Scheme

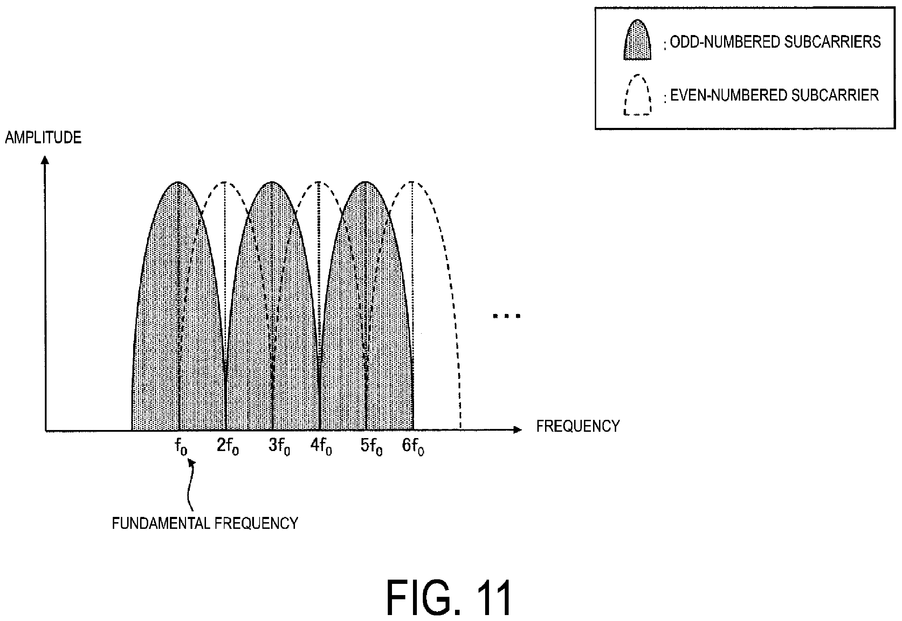

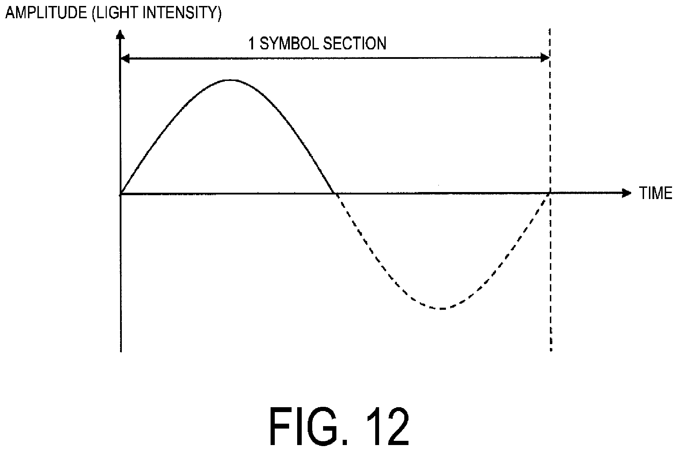

FIGs. 11 and 12 are diagrams for describing the ACO-OFDM scheme, which is one type of optical wireless OFDM scheme.

As illustrated in FIG. 11, in the ACO-OFDM scheme, only subcarriers having frequencies that are odd multiples of the fundamental frequency f₀ (also referred to as "odd-numbered subcarriers") are used to generate an OFDM signal. That is, in the ACO-OFDM scheme, subcarriers having frequencies that are even multiples of the fundamental frequency f₀ (also referred to as "even-numbered subcarriers") are not used to generate an OFDM signal.

As illustrated in FIG. 12, in the ACO-OFDM scheme, negative values are clipped to zero on the transmitting side. Since odd-numbered subcarriers are odd functions, negative values can be complemented by inverting the waveforms above 0 on the receiving side. In this way, the ACO-OFDM scheme is a scheme that focuses on the fact that signal waveforms of substantially both polarities can be transmitted using only non-negative polarity signals without applying a DC bias.

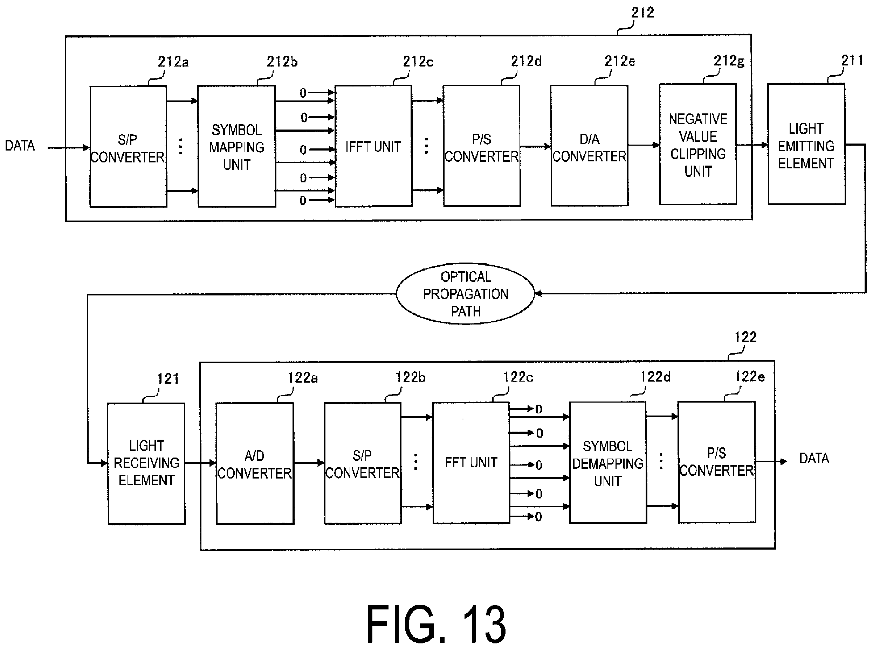

FIG. 13 is a diagram illustrating a configuration example of the transmitter 212 of the base station apparatus 200 and the receiver 122 of the terminal apparatus 100 when the ACO-OFDM scheme is used in downlink transmission. Here, the differences from the DCO-OFDM scheme will be described.

In the transmitter 212 of the base station apparatus 200, the symbol mapping unit 212b and the IFFT unit 212c perform IFFT by setting the even-numbered subcarriers to 0 since the even-numbered subcarriers are not used. The subcarriers constituting the ACO-OFDM signal have a feature that the polarity is inverted between the first half of the signal and the second half of the signal on the time axis. This feature is not lost even in multiplexing. A negative value clipping unit 212g clips the negative value of the analog signal output by the D/A converter 212e to zero to generate a non-negative polarity signal, and outputs the non-negative polarity signal (electrical signal). Meanwhile, in the receiver 122 of the terminal apparatus 100, the zero-clipped signal is replaced with a positive signal that is offset half the symbol length within the same symbol but with the polarity inverted, thereby demodulating the data into an OFDM signal.

### (5.3) Selection of Optical Wireless OFDM Scheme

As described above, the ACO-OFDM scheme does not add a DC bias as in the DCO-OFDM scheme, and therefore has superior power efficiency and higher noise resistance compared to the DCO-OFDM scheme. However, the ACO-OFDM scheme cannot use even-numbered subcarriers, and therefore has a lower throughput than the DCO-OFDM scheme.

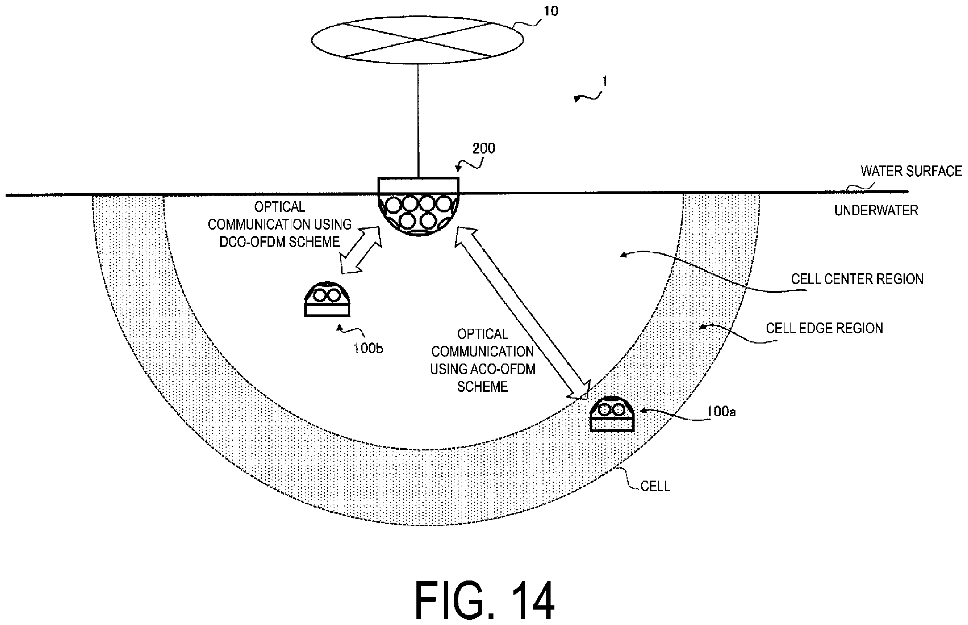

FIG. 14 is a diagram for describing selection of an optical wireless OFDM scheme according to the embodiment.

The base station apparatus 200 and the terminal apparatus 100 perform optical communication using an ACO-OFDM scheme at least when the terminal apparatus 100 is located in a cell edge region. The cell edge region refers to an edge region of a cell formed by the base station apparatus 200, and is, for example, a region in which reception quality (for example, received light intensity) of a reference optical signal received by the terminal apparatus 100 from the base station apparatus 200 is less than a threshold.

In the illustrated example, the terminal apparatus 100a located in a cell edge region performs optical communication with the base station apparatus 200 using the ACO-OFDM scheme. For example, the base station apparatus 200 transmits an optical signal to the terminal apparatus 100a using the ACO-OFDM scheme. This allows, even in the terminal apparatus 100a in a poor optical communication environment, the reception quality of the optical signal received from the base station apparatus 200 to be improved. Therefore, even when the base station apparatus 200 forms a communication area by transmitting optical signals from a plurality of light emitting elements 211 having different directivities, a plurality of terminal apparatuses 100 within a cell including a cell edge region can be accommodated appropriately.

The base station apparatus 200 and the terminal apparatus 100 may perform optical communication using an OFDM scheme selected from a plurality of OFDM schemes including the ACO-OFDM scheme based on the optical communication environment of the terminal apparatus 100. This allows the terminal apparatus 100 to adaptively use the OFDM scheme that is most suitable for the optical communication environment.

For example, the terminal apparatus 100 reports, to the base station apparatus 200, the reception quality (for example, the received light intensity) of the reference optical signal received by the terminal apparatus 100 from the base station apparatus 200. When the reception quality reported by the terminal apparatus 100 is less than a threshold, the base station apparatus 200 selects the ACO-OFDM scheme, configures the terminal apparatus 100 to use the ACO-OFDM scheme, for optical communication, and then performs optical communication with the terminal apparatus 100 using the ACO-OFDM scheme.

Alternatively, when the reception quality (for example, received light intensity) of the reference optical signal received by the terminal apparatus 100 from the base station apparatus 200 is less than a threshold, the terminal apparatus 100 selects the ACO-OFDM scheme and requests the base station apparatus 200 to use the ACO-OFDM scheme for optical communication. In response to the request, the base station apparatus 200 configures the terminal apparatus 100 to use the ACO-OFDM scheme, for optical communication, and then performs optical communication with the terminal apparatus 100 using the ACO-OFDM scheme.

Alternatively, the base station apparatus 200 or the terminal apparatus 100 may select the OFDM scheme based on the distance between the terminal apparatus 100 and the base station apparatus 200. For example, when the distance is equal to or greater than a threshold, the base station apparatus 200 or the terminal apparatus 100 selects the ACO-OFDM scheme. As a method for measuring (estimating) the distance between the terminal apparatus 100 and the base station apparatus 200, the terminal apparatus 100 and/or the base station apparatus 200 may have a means for transmitting and receiving sound waves (acoustics), and the distance may be measured by detecting the position of the communication partner using sound waves (acoustics). The terminal apparatus 100 and/or the base station apparatus 200 may have a camera and measure the distance by detecting the position of the communication partner using the camera. When the transmission power (emission intensity) of the reference optical signal is known, the distance may be measured based on a path loss, which is the difference between the emission intensity and the received light intensity detected on the receiving side.

The base station apparatus 200 and the terminal apparatus 100 may perform optical communication using the DCO-OFDM scheme when the terminal apparatus 100 is located in a cell center region. The cell edge region refers to a center region of a cell formed by the base station apparatus 200 (that is, a peripheral region of the base station apparatus 200), and is, for example, a region in which reception quality (for example, received light intensity) of a reference optical signal received by the terminal apparatus 100 from the base station apparatus 200 is equal to or higher than a threshold.

In the illustrated example, the terminal apparatus 100b located in a cell edge region performs optical communication with the base station apparatus 200 using the DCO-OFDM scheme. For example, the base station apparatus 200 transmits an optical signal to the terminal apparatus 100a using the DCO-OFDM scheme. This makes it possible to improve the throughput of the terminal apparatus 100b in a good optical communication environment.

For example, the terminal apparatus 100 reports, to the base station apparatus 200, the reception quality (for example, the received light intensity) of the reference optical signal received by the terminal apparatus 100 from the base station apparatus 200. When the reception quality reported by the terminal apparatus 100 is equal to or higher than a threshold, the base station apparatus 200 selects the DCO-OFDM scheme, configures the terminal apparatus 100 to use the DCO-OFDM scheme, for optical communication, and then performs optical communication with the terminal apparatus 100 using the DCO-OFDM scheme.

Alternatively, when the reception quality (for example, received light intensity) of the reference optical signal received by the terminal apparatus 100 from the base station apparatus 200 is equal to or higher than a threshold, the terminal apparatus 100 selects the DCO-OFDM scheme and requests the base station apparatus 200 to use the DCO-OFDM scheme for optical communication. In response to the request, the base station apparatus 200 configures the terminal apparatus 100 to use the DCO-OFDM scheme, for optical communication, and then performs optical communication with the terminal apparatus 100 using the DCO-OFDM scheme.

Alternatively, the base station apparatus 200 or the terminal apparatus 100 may select the DCO-OFDM scheme based on the distance between the terminal apparatus 100 and the base station apparatus 200. For example, when the distance is less than a threshold, the base station apparatus 200 or the terminal apparatus 100 selects the DCO-OFDM scheme.

When the terminal apparatus 100 moves from a cell edge region to a cell center region, the base station apparatus 200 and the terminal apparatus 100 may switch the OFDM scheme used for optical communication from the ACO-OFDM scheme to the DCO-OFDM scheme. On the other hand, when the terminal apparatus 100 moves from the cell center region to the cell edge region, the base station apparatus 200 and the terminal apparatus 100 may switch the OFDM scheme used for optical communication from the DCO-OFDM scheme to the ACO-OFDM scheme. The base station apparatus 200 or the terminal apparatus 100 may detect the movement based on the latest reception quality (for example, the received light intensity) at the terminal apparatus 100. The base station apparatus 200 or the terminal apparatus 100 may detect the movement based on the latest distance between the base station apparatus 200 and the terminal apparatus 100.

In addition, as described below, when a Layered-ACO-OFDM scheme is used as the ACO-OFDM scheme, the base station apparatus 200 and the terminal apparatus 100 may perform optical communication using the ACO-OFDM scheme (Layered-ACO-OFDM scheme) when the terminal apparatus 100 is located in the cell center region.

### (6) Layered-ACO-OFDM Scheme

A Layered-ACO-OFDM scheme according to the embodiment will be described.

In the downlink, the base station apparatus 200 can simultaneously perform transmission to a plurality of terminal apparatuses 100 at the same frequency by using spatial multiplexing. However, in a situation in which the distance between the terminal apparatuses 100 is short, it may be necessary to divide frequencies in order to suppress interference between the terminal apparatuses 100. Even in the case of composite transmission, there exist situations in which it is desirable to divide frequencies in order to simultaneously perform transmission to a plurality of terminal apparatuses 100.

In the OFDM scheme for radio wave communication, for example, frequencies can be divided by allocating resources using a predetermined number of consecutive subcarriers as one resource allocation unit. However, in the above-mentioned ACO-OFDM scheme, only odd-numbered subcarriers can be used, and resource allocation such as that in the OFDM scheme in radio wave communication cannot be applied.

On the other hand, there exists a technique called Layered-ACO-OFDM, which overcomes the drawback of the ACO-OFDM scheme in that even-numbered subcarriers cannot be used. In the Layered-ACO-OFDM scheme, ACO-OFDM with a fundamental frequency of 2ⁱf₀ is multiplexed onto the fundamental frequency f₀.

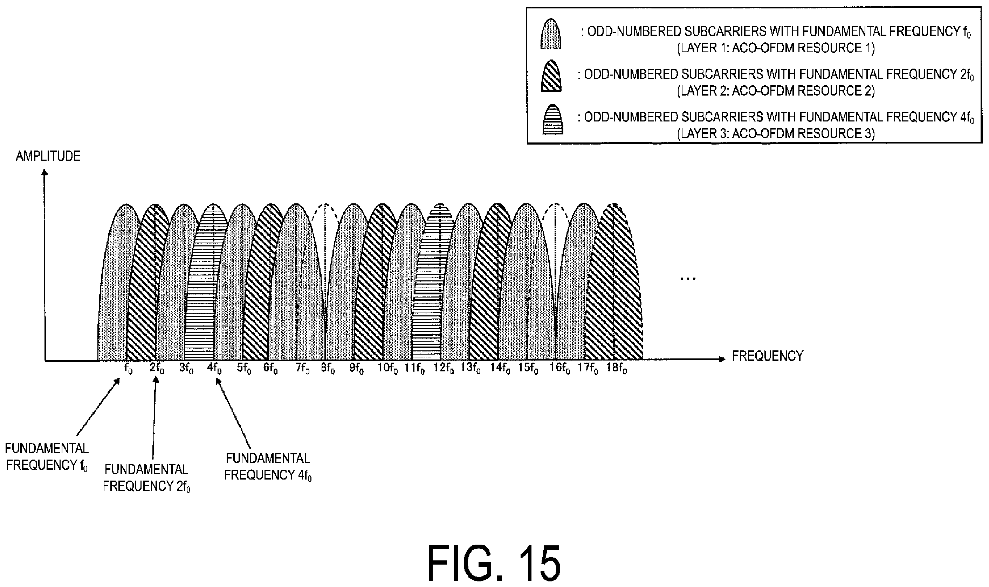

FIG. 15 is a diagram for describing the Layered-ACO-OFDM scheme.

In the Layered-ACO-OFDM scheme, ACO-OFDM with fundamental frequencies f₀, 2f₀, 4f₀, ... 2ⁱf₀ is multiplexed. In the illustrated example, the odd-numbered subcarriers with the fundamental frequency f₀, that is, subcarriers f₀, 3f₀, 5f₀, ... constitute the first layer, layer 1 (the lowest layer). The odd-numbered subcarriers with the fundamental frequency 2f₀, that is, subcarriers 2f₀, 3(2f₀) = 6f₀, 5(2f₀) = 10f₀, ... constitute the second layer, layer 2. The odd-numbered subcarriers with the fundamental frequency 4f₀, that is, subcarriers 4f₀, 3(4f₀) = 12f₀, 5(4f₀) = 20f₀, ... constitute the third layer, layer 3.

By multiplexing these layers, even-numbered subcarriers can be used in the ACO-OFDM scheme. In addition, in the Layered-ACO-OFDM scheme in the related art, it is assumed that one-to-one optical communication is performed with the transmitting side and the receiving side facing each other, and that throughput can be improved by multiplexing a plurality of layers using the Layered-ACO-OFDM scheme.

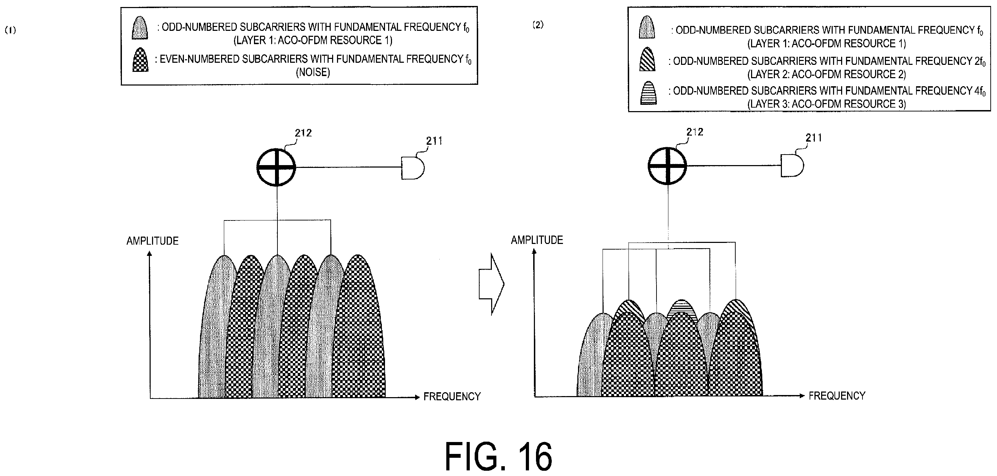

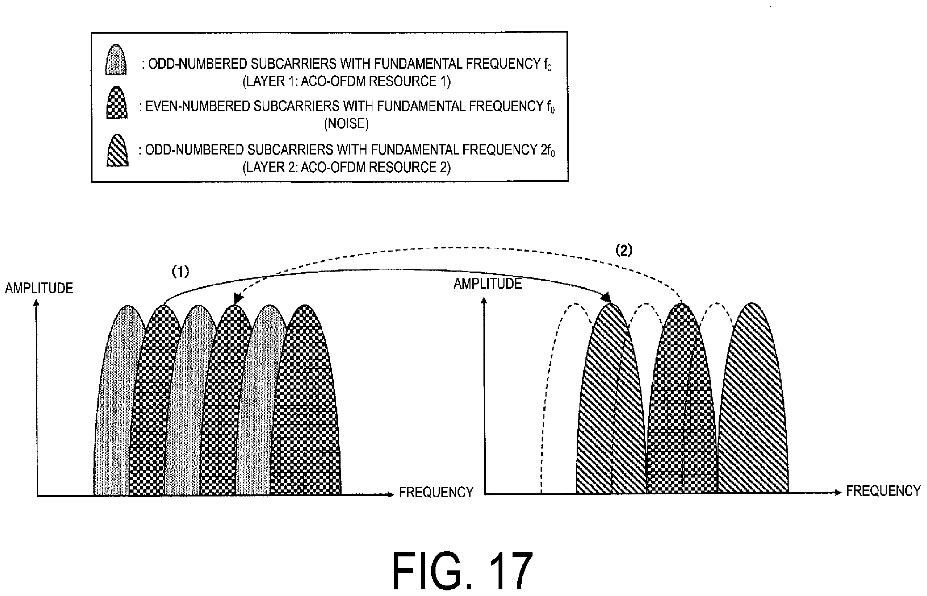

FIGs. 16 and 17 are diagrams for describing problems that arise when the Layered-ACO-OFDM scheme is applied to the cellular optical communication system 1.

As illustrated in (1) of FIG. 16, in the ACO-OFDM scheme, out-of-band noise (clipping noise) caused by zero clipping of negative values occurs on even-numbered subcarriers. Therefore, as illustrated in (2) of FIG. 16, in order to keep the total transmission power including out-of-band noise constant in Layered-ACO-OFDM, the transmission power of the desired signal has to be reduced. In the illustrated example, out-of-band noise occurs on even-numbered subcarriers with the fundamental frequency f₀. Layer 2 consisting of odd-numbered subcarriers with the fundamental frequency 2f₀, and layer 3 consisting of odd-numbered subcarriers with the fundamental frequency 4f₀, are required to have a high power density in consideration of the out-of-band noise, but the power density cannot be increased. In this way, in order to keep the total transmission power including noise constant in Layered-ACO-OFDM, the power density of the desired wave has to be reduced, and Layered-ACO-OFDM is not suitable as it is for application to the terminal apparatus 100 in cell edge regions.

In the Layered-ACO-OFDM scheme, where i < j, interference occurs from 2ⁱf₀ ACO-OFDM (lower layer) to 2ⁱf₀ ACO-OFDM (upper layer). For example, as illustrated in (1) of FIG. 17, layer 1 consisting of odd-numbered subcarriers with the fundamental frequency f₀, has noise on its even-numbered subcarriers, and this noise causes interference effects on layer 2, which is made up of odd-numbered subcarriers with the fundamental frequency 2f₀. On the other hand, no interference occurs from 2^{j}f₀ ACO-OFDM (upper layer) to 2ⁱf₀ ACO-OFDM (lower layer) (see (2) in FIG. 17). Therefore, on the receiving side, it is necessary to regenerate a replica of the clipping noise from the reception signal of iⁱf₀ ACO-OFDM (lower layer) and subtract the replica when receiving the signal of 2^{j}f₀ ACO-OFDM (upper layer). In other words, unless interference is cancelled in the upper layer using an interference replica generated using the decoding result in the lower layer, the signal in the upper layer cannot be decoded. Therefore, when receiving an upper layer signal, decoding and replica generation in a lower layer signal are essential. This increases the load on the receiving side and makes it impossible to allocate different layers to different terminal apparatuses 100.

In the embodiment, under the premise that the base station apparatus 200 transmits optical signals from a plurality of light emitting elements 211 having different directivities, different layers can be transmitted with different directivities, thereby making it possible to allocate different layers to different terminal apparatuses 100. That is, the base station apparatus 200 allocates a plurality of ACO-OFDM resources (a plurality of layers) with different fundamental frequencies to a plurality of terminal apparatuses 100 within its own cell. The i-th (i: integer equal to or greater than 0) ACO-OFDM resource among the plurality of ACO-OFDM resources is composed of odd-numbered subcarriers with the fundamental frequency 2ⁱf₀.

### (6.2) Spatial Multiplexing Transmission

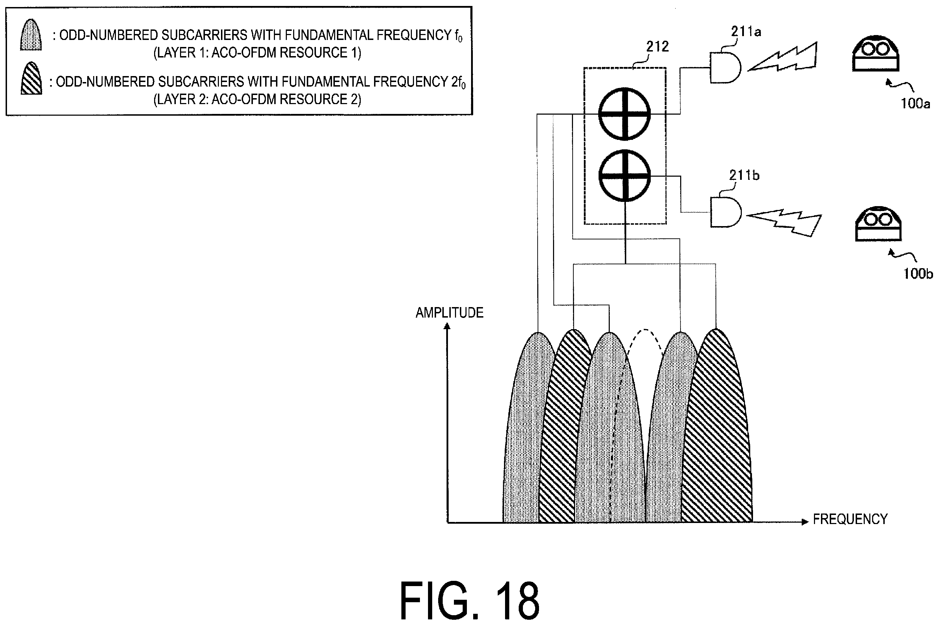

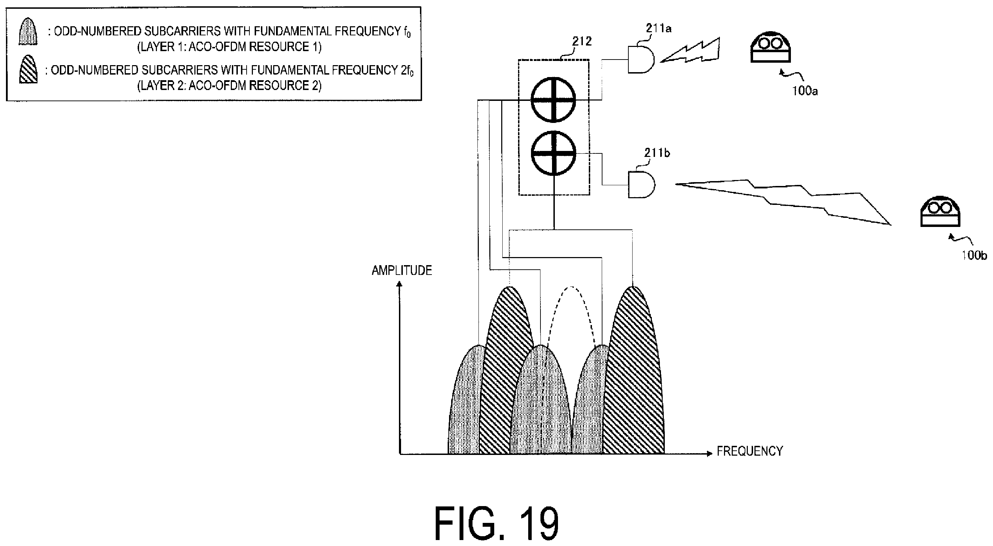

FIGs. 18 and 19 are diagrams for describing spatial multiplexing transmission using the Layered-ACO-OFDM scheme according to the embodiment.

As illustrated in FIG. 18, when performing spatial multiplexing transmission to different terminal apparatuses 100, the base station apparatus 200 allocates ACO-OFDM resources with different fundamental frequencies (that is, different layers). In the illustrated example, the base station apparatus 200 has a light emitting element 211a and a light emitting element 211b whose optical axis direction is different from that of the light emitting element 211a. When performing spatial multiplexing transmission in which transmission to the terminal apparatus 100a using the light emitting element 211a and transmission to the terminal apparatus 100b using the light emitting element 211b are simultaneously performed, the base station apparatus 200 allocates ACO-OFDM resource 1 (layer 1) to the terminal apparatus 100a and allocates ACO-OFDM resource 2 (layer 2), which has a fundamental frequency different from that of ACO-OFDM resource 1, to the terminal apparatus 100b.

The base station apparatus 200 then transmits an optical signal from the light emitting element 211a to the terminal apparatus 100a using ACO-OFDM resource 1 (layer 1), and transmits an optical signal from the light emitting element 211b to the terminal apparatus 100b using ACO-OFDM resource 2 (layer 2). The terminal apparatus 100a receives an optical signal from the base station apparatus 200 using ACO-OFDM resource 1 (layer 1) allocated by the base station apparatus 200. The terminal apparatus 100b receives an optical signal from the base station apparatus 200 using ACO-OFDM resource 2 (layer 2) allocated by the base station apparatus 200.

Here, since the terminal apparatus 100a uses a low fundamental frequency (that is, a low layer), it is not subject to interference from the optical signal intended for the terminal apparatus 100b. On the other hand, the terminal apparatus 100b uses a higher fundamental frequency (that is, a higher layer), but the different directivity reduces interference from the optical signal intended for the terminal apparatus 100a. Therefore, the terminal apparatus 100b can ensure reception quality (for example, SINR) without generating a replica of the signal intended for the terminal apparatus 100a. Therefore, it becomes possible to use Layered-ACO-OFDM suitable for the cellular optical communication system 1.

Although an example of performing spatial multiplexing transmission to two terminal apparatuses 100 has been described here, the base station apparatus 200 may perform spatial multiplexing transmission to three or more terminal apparatuses 100. Even in this case, the base station apparatus 200 allocates different ACO-OFDM resources (different layers) to each terminal apparatus 100, and performs transmission to each terminal apparatus 100 with different directivities (different light emitting elements 211).

As illustrated in FIG. 19, the base station apparatus 200 may increase the transmission power density of ACO-OFDM with a high fundamental frequency (that is, a higher layer). Since ACO-OFDM with a high fundamental frequency has a small number of subcarriers, the transmission power per subcarrier (transmission power density) can be increased if the total transmission power is kept constant. Therefore, in the terminal apparatus 100b, noise resistance including out-of-band noise from the terminal apparatus 100a can be improved. In the illustrated example, the fundamental frequency of ACO-OFDM resource 2 is higher than the fundamental frequency of ACO-OFDM resource 1. The base station apparatus 200 uses a first transmission power density for transmission to the terminal apparatus 100a to which ACO-OFDM resource 1 has been allocated, and uses a second transmission power density higher than the first transmission power density for transmission to the terminal apparatus 100b to which ACO-OFDM resource 2 has been allocated.

Under such a premise, the base station apparatus 200 may allocate ACO-OFDM resources with a high fundamental frequency to terminal apparatuses 100 in a poor optical communication environment (for example, terminal apparatuses 100 in a cell edge region). This allows the terminal apparatus 100 in the cell edge region to be appropriately accommodated. In the illustrated example, the terminal apparatus 100b is located farther from the base station apparatus 200 than the terminal apparatus 100a. That is, the optical communication environment of the terminal apparatus 100b is worse than that of the terminal apparatus 100a. In this case, the base station apparatus 200 allocates ACO-OFDM resource 1 to the terminal apparatus 100a, and allocates ACO-OFDM resource 2, which has a higher fundamental frequency than ACO-OFDM resource 1, to the terminal apparatus 100b.

### (6.3) Composite Transmission

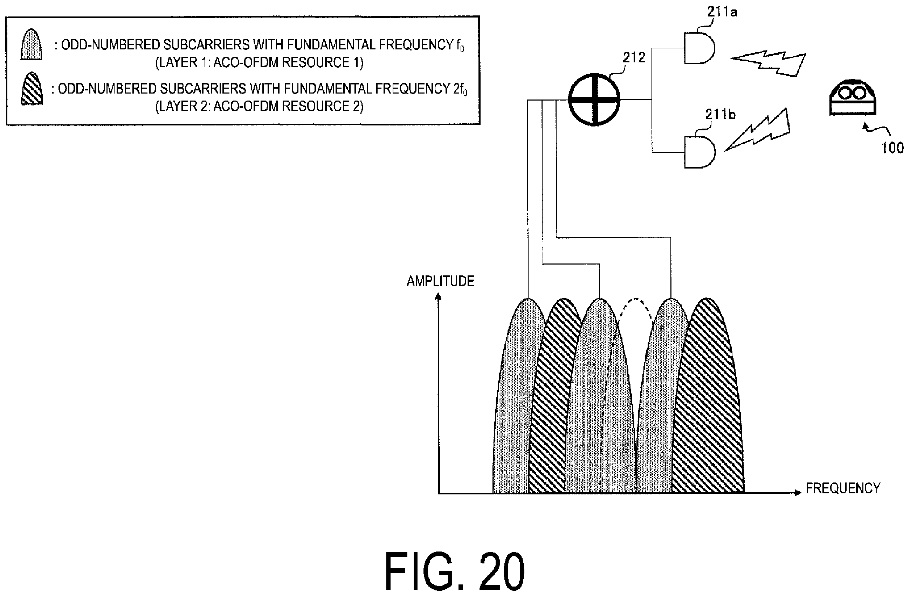

FIG. 20 is a diagram for describing composite transmission using the Layered-ACO-OFDM scheme according to the embodiment.

When performing composite transmission from a plurality of light emitting elements 211 to the same terminal apparatus 100, the base station apparatus 200 allocates ACO-OFDM resources with the same fundamental frequency to the terminal apparatus 100. In the illustrated example, when performing a composite transmission in which the same data is transmitted to one terminal apparatus 100 from light emitting elements 211a and 211b which have different optical axis directions, the base station apparatus 200 controls the light emitting elements 211a and 211b such that the composite transmission is performed using the same ACO-OFDM resource allocated to the one terminal apparatus 100. This allows appropriate composite transmission to be performed using the Layered-ACO-OFDM scheme.

### (6.1) Resource Allocation

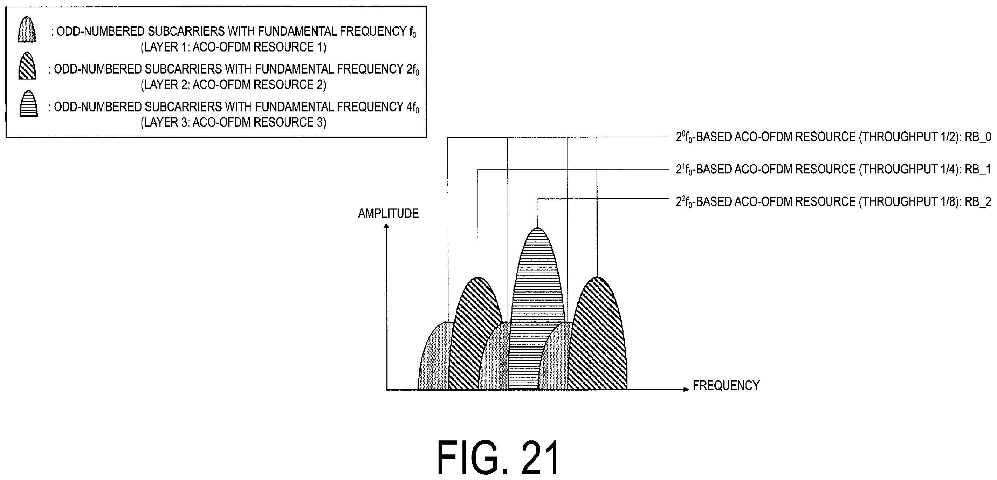

FIG. 21 is a diagram for describing resource allocation according to the embodiment.

The base station apparatus 200 performs resource allocation (also called "scheduling") for each terminal apparatus 100 within its own cell, using each of a plurality of ACO-OFDM resources with different fundamental frequencies as a resource allocation unit. Such a resource allocation unit may be referred to as a resource block (RB). In the illustrated example, the base station apparatus 200 performs resource allocation using ACO-OFDM resource 1 (RB_0) consisting of odd-numbered subcarriers with the fundamental frequency f₀, ACO-OFDM resource 2 (RB_1) consisting of odd-numbered subcarriers with the fundamental frequency 2f₀, and ACO-OFDM resource 3 (RB_3) consisting of odd-numbered subcarriers with the fundamental frequency 4f₀ as resource allocation units.

Here, compared to the DCO-OFDM scheme, ACO-OFDM resource 1 (RB_0) has a throughput of 1/2, ACO-OFDM resource 2 (RB_1) has a throughput of 1/4, and ACO-OFDM resource 3 (RB_2) has a throughput of 1/8. As described above, the base station apparatus 200 can increase the transmission power per subcarrier (transmission power density) as the fundamental frequency of ACO-OFDM increases, thereby improving reception quality.

For example, the base station apparatus 200 allocates only RB_2 to the terminal apparatus 100 with an extremely low SNR, and performs scheduling to increase the transmission power per subcarrier (transmission power density). The base station apparatus 200 may allocate all of RB_0, RB_1, and RB_2 to the terminal apparatus 100 with a high SNR. In this case, the base station apparatus 200 does not necessarily need to use DCO-OFDM. When the base station apparatus 200 allocates a plurality of RBs to one terminal apparatus 100, it is not necessary to provide a power difference between the RBs.

### (7) Other Embodiments

Although the above embodiments have been described mainly with respect to downlink transmission, the operations of the above embodiments may also be applied to uplink transmission. For example, the terminal apparatus 100 may communicate with a plurality of base station apparatuses 200 simultaneously. In this case, the terminal apparatus 100 may perform spatial multiplexing transmission to a plurality of base station apparatuses 200 using different ACO-OFDM resources with different directivities.

In the above-described embodiment, an example in which the base station apparatus 200 is installed at a water surface has been described. However, the base station apparatus 200 may be installed on the bottom of the water. The terminal apparatus 100 moving underwater performs optical communication with the base station apparatus 200 located below (diagonally below) the terminal apparatus 100. The base station apparatus 200 may be installed on an underwater wall surface. The terminal apparatus 100 performs optical communication with the base station apparatus 200 while moving vertically underwater.

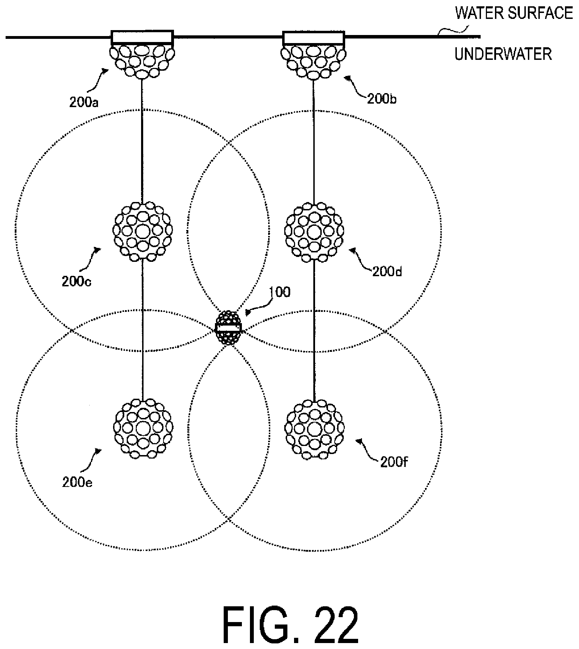

As illustrated in FIG. 22, a plurality of base station apparatuses 200 may be deployed three-dimensionally underwater. In the illustrated example, each of the base station apparatuses 200a and 200b is located near the water surface and is fixed to, for example, a buoy. Each of the base station apparatuses 200a and 200b has a hemispherical housing having a surface on which a plurality of light receivers/emitters are arranged in an array. Each of the base station apparatuses 200a and 200b is communicatively connected to the network 10 via the backhaul line. A base station apparatus 200c is suspended from the base station apparatus 200a via a rope and/or a cable (hereinafter referred to as "cable or the like"). A base station apparatus 200e is suspended from the base station apparatus 200c via a cable or the like. Similarly, a base station apparatus 200d is suspended via a cable or the like from the base station apparatus 200b adjacent to the base station apparatus 200a. A base station apparatus 200f is suspended from the base station apparatus 200d via a cable or the like. Each of the base station apparatuses 200c, 200d, 200e, and 200f has a housing of a spherical shape, and a plurality of optical communicators are arranged in an array on the spherical shape of the housing.

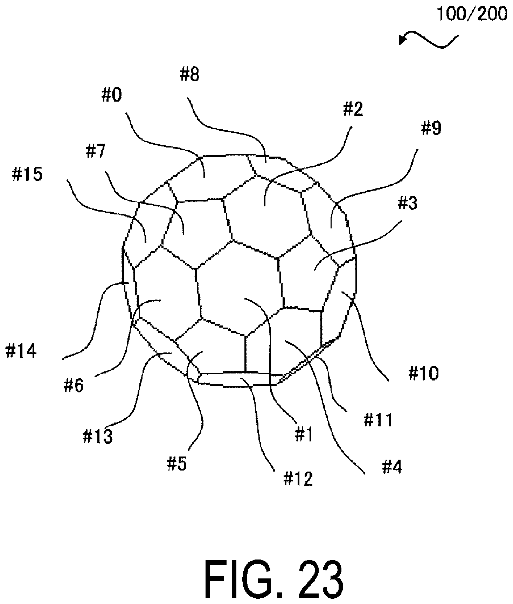

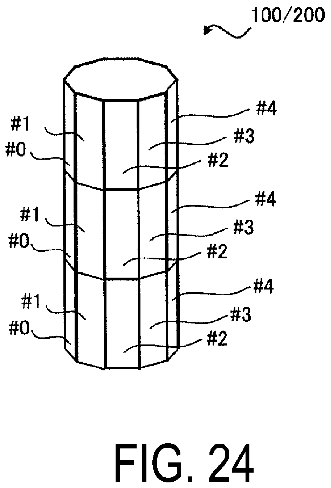

In the above-described embodiments, an example in which the light receiver/emitter 150 of the terminal apparatus 100 and the light receiver/emitter 250 of the base station apparatus 200 each are formed into a hemispherical shape has been described. However, the terminal apparatus 100 and/or the base station apparatus 200 may be configured so that the entire apparatus is spherical (or, from another point of view, mirror ball shaped) as illustrated in FIG. 23. For example, the terminal apparatus 100 and/or the base station apparatus 200 may form a polyhedron, each surface of the polyhedron may form a light receiving/emitting region, and at least one pair of a light emitting element and a light receiving element may be disposed on each surface. Alternatively, the terminal apparatus 100 and/or the base station apparatus 200 may be configured in a rod shape as a whole, as illustrated in FIG. 24. For example, the terminal apparatus 100 and/or the base station apparatus 200 may form a rectangular prism, the side surfaces of the rectangular prism may form a light receiving/emitting region, and at least one pair of a light emitting element and a light receiving element may be disposed on each of the side surfaces.

A program that causes a computer to execute each piece of processing performed by the terminal apparatus 100 or the base station apparatus 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each piece of processing performed by the terminal apparatus 100 or the base station apparatus 200 may be integrated, and at least a part of the terminal apparatus 100 or the base station apparatus 200 may be configured as a semiconductor integrated circuit (a chipset, or a System on a chip (SoC)).

The phrases "based on" and "depending on/in response to" used in the present disclosure do not mean "based only on" and "only depending on/in response to" unless specifically stated otherwise. The phrase "based on" means both "based only on" and "based at least in part on." The phrase "depending on" means both "only depending on" and "at least partially depending on." The terms "include," "comprise" and variations thereof do not mean "include only items stated" but instead mean "may include only items stated" or "may include not only the items stated but also other items." The term "or" used in the present disclosure is not intended to be "exclusive or." For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to Japanese Patent Application No. 2022-187540 (filed on November 24, 2022), the contents of which are incorporated herein by reference in their entirety.

### (8) Supplementary Notes

Features relating to the embodiments described above will be described below as supplementary notes.

### Supplementary Note 1

A cellular optical communication system (1) that performs optical communication being wireless communication using light, the cellular optical communication system (1) including: a base station apparatus (200) configured to manage a cell; and
a terminal apparatus (100) configured to perform the optical communication with the base station apparatus (200) in the cell by using an orthogonal frequency division multiplexing (OFDM) scheme,
in which the base station apparatus (200) and the terminal apparatus (100) are configured to perform the optical communication using an asymmetrically clipped optical (ACO)-OFDM scheme at least when the terminal apparatus (100) is located in a cell edge region.

### Supplementary Note 2

The cellular optical communication system (1) according to Supplementary Note 1, in which the base station apparatus (200) and the terminal apparatus (100) are configured to perform the optical communication using an OFDM scheme selected from a plurality of OFDM schemes including the ACO-OFDM scheme based on an optical communication environment of the terminal apparatus (100).

### Supplementary Note 3

The cellular optical communication system (1) according to Supplementary Note 2, in which the plurality of OFDM schemes further include a direct current optical (DCO)-orthogonal frequency division multiplexing (OFDM) scheme, and
the base station apparatus (200) and the terminal apparatus (100) are configured to perform the optical communication using the DCO-OFDM scheme when the terminal apparatus (100) is located in a cell center region.

### Supplementary Note 4

The cellular optical communication system (1) according to Supplementary Note 3, in which the base station apparatus (200) and the terminal apparatus (100) are configured to switch the OFDM scheme used for the optical communication from the ACO-OFDM scheme to the DCO-OFDM scheme when the terminal apparatus (100) moves from the cell edge region to the cell center region.

### Supplementary Note 5

The cellular optical communication system (1) according to Supplementary Note 3 or 4, in which the base station apparatus (200) and the terminal apparatus (100) are configured to switch the OFDM scheme used for the optical communication from the DCO-OFDM scheme to the ACO-OFDM scheme when the terminal apparatus (100) moves from the cell center region to the cell edge region.

### Supplementary Note 6

The cellular optical communication system (1) according to any one of Supplementary Notes 1 to 5,
in which the base station apparatus (200) includes a controller (230) configured to allocate a plurality of ACO-OFDM resources with different fundamental frequencies to a plurality of terminal apparatuses (100) in the cell, and
an i-th (i: integer equal to or greater than 0) ACO-OFDM resource among the plurality of ACO-OFDM resources comprises a subcarrier having a frequency that is an odd multiple of a fundamental frequency 2ⁱf₀.

### Supplementary Note 7

The cellular optical communication system (1) according to Supplementary Note 6, in which the controller (230) is configured to perform resource allocation for each terminal apparatus (100) in the cell by using each of the plurality of ACO-OFDM resources as a resource allocation unit.

### Supplementary Note 8

The cellular optical communication system (1) according to Supplementary Note 6 or 7, in which the base station apparatus (200) further includes a plurality of light emitting elements (211) including a first light emitting element (211) and a second light emitting element (211) whose optical axis direction is different from an optical axis direction of the first light emitting element (211), and
the controller (230) is configured to, when performing spatial multiplexing transmission in which transmission to a first terminal apparatus (100) using the first light emitting element (211) and transmission to a second terminal apparatus (100) using the second light emitting element (211) are simultaneously performed, allocate a first ACO-OFDM resource to the first terminal apparatus (100) and allocate a second ACO-OFDM resource with a fundamental frequency different from a fundamental frequency of the first ACO-OFDM resource to the second terminal apparatus (100).

### Supplementary Note 9

The cellular optical communication system (1) according to Supplementary Note 8, in which the controller (230) is configured to use a first transmission power density for transmission to the first terminal apparatus (100) and a second transmission power density higher than the first transmission power density for transmission to the second terminal apparatus (100) when the fundamental frequency of the second ACO-OFDM resource is higher than the fundamental frequency of the first ACO-OFDM resource.

### Supplementary Note 10

The cellular optical communication system (1) according to Supplementary Note 9, in which the controller (230) is configured to, when an optical communication environment of the second terminal apparatus (100) is worse than an optical communication environment of the first terminal apparatus (100), allocate the first ACO-OFDM resource to the first terminal apparatus (100) and allocate the second ACO-OFDM resource with the fundamental frequency higher than the fundamental frequency of the first ACO-OFDM resource to the second terminal apparatus (100).

### Supplementary Note 11

The cellular optical communication system (1) according to Supplementary Note 6 or 7, in which the base station apparatus (200) further includes a plurality of light emitting elements (211) having different optical axis directions, and
the controller (230) is configured to, when performing a composite transmission in which identical data is transmitted from the plurality of light emitting elements (211) to one terminal apparatus (100), control the plurality of light emitting elements (211) such that the composite transmission is performed using the same ACO-OFDM resource allocated to the one terminal apparatus (100).

### Supplementary Note 12

The cellular optical communication system (1) according to any one of Supplementary Notes 1 to 11, in which the terminal apparatus (100) and the base station apparatus (200) are configured to perform the optical communication underwater.

### Supplementary Note 13

A base station apparatus (200) that manages a cell in a cellular optical communication system (1) for performing optical communication being wireless communication using light, the base station apparatus (200) including:
an optical communicator (210, 220) configured to perform the optical communication with the terminal apparatus (100) in the cell by using an orthogonal frequency division multiplexing (OFDM) scheme; and
a controller (230) configured to control the optical communicator such that the optical communication with the terminal apparatus (100) is performed using an asymmetrically clipped optical (ACO)-OFDM scheme at least when the terminal apparatus (100) is located in a cell edge region.

### Supplementary Note 14

A terminal apparatus (100) used in a cellular optical communication system (1) that performs optical communication being wireless communication using light, the terminal apparatus (100) including:
an optical communicator (110, 120) configured to perform the optical communication with a base station apparatus (200) that manages a cell by using an orthogonal frequency division multiplexing (OFDM) scheme; and
a controller (130) configured to control the optical communicator such that the optical communication with the base station apparatus (200) is performed using an asymmetrically clipped optical (ACO)-OFDM scheme at least when the terminal apparatus (100) is located in a cell edge region.

### REFERENCE SIGNS

1: Cellular optical communication system
10: Network
100: Terminal apparatus
110: Light emitter
111: Light emitting element
112: Transmitter
120: Light receiver
121: Light receiving element
122: Receiver
122a: A/D converter
122b: S/P converter
122c: FFT unit
122d: Symbol demapping unit
122e: P/S converter
130: Controller
131: Processor
132: Memory
150: Light receiver/emitter
151: Light receiving/emitting region
160: Body portion
200: Base station apparatus
210: Light emitter
211: Light emitting element
212: Transmitter
212a: S/P converter
212b: Symbol mapping unit
212c: IFFT unit
212d: P/S converter
212e: D/A converter
212f: Offset adder
212g: Negative value clipping unit
220: Light receiver
221: Light receiving element
222: Receiver
230: Controller
231: Processor
232: Memory
240: Backhaul communicator
241: Network communicator
242: Inter-base station communicator
250: Light receiver/emitter
251: Light receiving/emitting region
260: Body portion

## Claims

1. A cellular optical communication system that performs optical communication being wireless communication using light, the cellular optical communication system comprising:
a base station apparatus configured to manage a cell; and
a terminal apparatus configured to perform the optical communication with the base station apparatus in the cell by using an orthogonal frequency division multiplexing (OFDM) scheme, wherein
the base station apparatus and the terminal apparatus are configured to perform the optical communication using an asymmetrically clipped optical (ACO)-OFDM scheme at least when the terminal apparatus is located in a cell edge region.

2. The cellular optical communication system according to claim 1, wherein
the base station apparatus and the terminal apparatus are configured to perform the optical communication using an OFDM scheme selected from a plurality of OFDM schemes including the ACO-OFDM scheme based on an optical communication environment of the terminal apparatus.

3. The cellular optical communication system according to claim 2, wherein
the plurality of OFDM schemes further include a direct current optical (DCO)-orthogonal frequency division multiplexing (OFDM) scheme, and
the base station apparatus and the terminal apparatus are configured to perform the optical communication using the DCO-OFDM scheme when the terminal apparatus is located in a cell center region.

4. The cellular optical communication system according to claim 3, wherein
the base station apparatus and the terminal apparatus are configured to switch the OFDM scheme used for the optical communication from the ACO-OFDM scheme to the DCO-OFDM scheme when the terminal apparatus moves from the cell edge region to the cell center region.

5. The cellular optical communication system according to claim 3, wherein
the base station apparatus and the terminal apparatus are configured to switch the OFDM scheme used for the optical communication from the DCO-OFDM scheme to the ACO-OFDM scheme when the terminal apparatus moves from the cell center region to the cell edge region.

6. The cellular optical communication system according to any one of claims 1 to 5,
wherein
the base station apparatus comprises a controller configured to allocate a plurality of ACO-OFDM resources with different fundamental frequencies to a plurality of terminal apparatuses in the cell, and
an i-th (i: integer equal to or greater than 0) ACO-OFDM resource among the plurality of ACO-OFDM resources comprises a subcarrier having a frequency that is an odd multiple of a fundamental frequency 2ⁱf₀.

7. The cellular optical communication system according to claim 6, wherein
the controller is configured to perform resource allocation for each terminal apparatus in the cell by using each of the plurality of ACO-OFDM resources as a resource allocation unit.

8. The cellular optical communication system according to claim 6, wherein
the base station apparatus further comprises a plurality of light emitting elements comprising a first light emitting element and a second light emitting element whose optical axis direction is different from an optical axis direction of the first light emitting element, and
the controller is configured to, when performing spatial multiplexing transmission in which transmission to a first terminal apparatus using the first light emitting element and transmission to a second terminal apparatus using the second light emitting element are simultaneously performed, allocate a first ACO-OFDM resource to the first terminal apparatus and allocate a second ACO-OFDM resource with a fundamental frequency different from a fundamental frequency of the first ACO-OFDM resource to the second terminal apparatus.

9. The cellular optical communication system according to claim 8, wherein
the controller is configured to use a first transmission power density for transmission to the first terminal apparatus and a second transmission power density higher than the first transmission power density for transmission to the second terminal apparatus when the fundamental frequency of the second ACO-OFDM resource is higher than the fundamental frequency of the first ACO-OFDM resource.

10. The cellular optical communication system according to claim 9, wherein
the controller is configured to, when an optical communication environment of the second terminal apparatus is worse than an optical communication environment of the first terminal apparatus, allocate the first ACO-OFDM resource to the first terminal apparatus and allocate the second ACO-OFDM resource with the fundamental frequency higher than the fundamental frequency of the first ACO-OFDM resource to the second terminal apparatus.

11. The cellular optical communication system according to claim 6, wherein
the base station apparatus further includes a plurality of light emitting elements having different optical axis directions, and
the controller is configured to, when performing a composite transmission in which identical data is transmitted from the plurality of light emitting elements to one terminal apparatus, control the plurality of light emitting elements such that the composite transmission is performed using the same ACO-OFDM resource allocated to the one terminal apparatus.

12. The cellular optical communication system according to claim 1, wherein
the terminal apparatus and the base station apparatus are configured to perform the optical communication underwater.

13. A base station apparatus that manages a cell in a cellular optical communication system for performing optical communication being wireless communication using light, the base station apparatus comprising:
an optical communicator configured to perform the optical communication with the terminal apparatus in the cell by using an orthogonal frequency division multiplexing (OFDM) scheme; and
a controller configured to control the optical communicator such that the optical communication with the terminal apparatus is performed using an asymmetrically clipped optical (ACO)-OFDM scheme at least when the terminal apparatus is located in a cell edge region.

14. A terminal apparatus used in a cellular optical communication system that performs optical communication being wireless communication using light, the terminal apparatus comprising:
an optical communicator configured to perform the optical communication with a base station apparatus that manages a cell by using an orthogonal frequency division multiplexing (OFDM) scheme; and
a controller configured to control the optical communicator such that the optical communication with the base station apparatus is performed using an asymmetrically clipped optical (ACO)-OFDM scheme at least when the terminal apparatus is located in a cell edge region.
